# EUROPEAN PATENT APPLICATION

(11) **EP 4 395 322 A1**
(43) Date of publication of application: **03.07.2024**
(21) Application number: 22909758.9
(22) Date of filing: 08.12.2022
(51) Int. Cl.: H04N 19/597

(54) **POINT CLOUD ENCODING METHOD, POINT CLOUD DECODING METHOD, COMMUNICATION NODE, AND STORAGE MEDIUM**

(30) Priority: 24.12.2021 CN 202111602149
(71) Applicant: ZTE Corporation, Shenzhen, Guangdong 518057 (CN); Sun Yat-Sen University, Guangzhou, Guangdong 510275 (CN)
(72) Inventor: LIANG, Fan, Guangzhou, Guangdong 510275 (CN); WU, Zhao, Shenzhen, Guangdong 518057 (CN); GAO, Ying, Shenzhen, Guangdong 518057 (CN); WU, Ping, Shenzhen, Guangdong 518057 (CN); XIE, Shaowei, Shenzhen, Guangdong 518057 (CN)
(74) Representative: Regimbeau
(86) International application number: PCT/CN2022/137409
(87) International publication number: WO 2023/116443

(57) **Abstract**

Provided are a point cloud encoding method, a point cloud decoding method, a communication node, and a storage medium. The method includes predicting attribute information and generating a residual; quantizing the residual; performing run length encoding on the quantized residual to generate a run length value; for each run length value, selecting an entropy encoding strategy corresponding to a run length value to perform entropy encoding on the run length value; and processing the encoded run length value.

## Description

This application claims priority to Chinese Patent Application No. 202111602149.3 filed with the China National Intellectual Property Administration (CNIPA) on Dec. 24, 2021, the disclosure of which is incorporated herein by reference in its entirety.

### TECHNICAL FIELD

The present application relates to the field of communication technology, for example, a point cloud encoding method, a point cloud decoding method, a communication node, and a storage medium.

### BACKGROUND

A point cloud is a collection of discrete points distributed irregularly in space to express the space structure and surface attributes of a 3D object or scene. A point in a point cloud includes attributes such as color or reflectivity in addition to geometric coordinates. Spatial coordinates of sampling points on the surface of an object are acquired to form a collection of points. This collection is referred to as a point cloud. Point clouds are applied to fields including surveying and mapping, automobilism, agriculture, planning and design, archaeology and cultural relics protection, medical treatment, and games and entertainment. As three-dimensional scanning technologies and systems become increasingly mature, point cloud data based on 3D coordinate information on the surface of an actual object can be quickly and accurately acquired and stored so that point cloud data is gradually widely used in various image processing fields.

Attribute information encoding of a point cloud generally uses a predicative coding method. In the attribute information encoding, the run length value determines the size of an entropy-encoded code word, with a long code word and a low compression rate.

### SUMMARY

The present application provides a point cloud encoding method, a point cloud decoding method, a communication node, and a storage medium.

In a first aspect, an embodiment of the present application provides a point cloud encoding method. The method includes predicting attribute information and generating a residual; quantizing the residual; performing run length encoding on the quantized residual to generate a run length value; and for each run length value, selecting an entropy encoding strategy corresponding to a run length value to perform entropy encoding on the run length value; and processing the encoded run length value.

In a second aspect, an embodiment of the present application provides a point cloud decoding method. The method includes acquiring an encoded run length value; decoding the encoded run length value according to a set threshold; and processing the decoded run length value.

In a third aspect, an embodiment of the present application provides a first communication node. The first communication node includes one or more processors; and a storage apparatus configured to store one or more programs.

When executed by the one or more processors, the one or more programs cause the one or more processors to perform the method of the first aspect of the present application.

In a fourth aspect, an embodiment of the present application provides a second communication node. The second communication node includes one or more processors; and a storage apparatus configured to store one or more programs.

When executed by the one or more processors, the one or more programs cause the one or more processors to perform the method of the second aspect of the present application.

In a fifth aspect, an embodiment of the present application provides a storage medium. The storage medium stores a computer program which, when executed by a processor, causes the processor to perform the method of any embodiment of the present application.

The preceding embodiments and other aspects of the present application and implementations thereof are described in more detail in the brief description of drawings, detailed description, and claims.

### BRIEF DESCRIPTION OF DRAWINGS

FIG. 1 is a flowchart of a point cloud encoding method according to an embodiment of the present application.
FIG. 2 is a flowchart of a point cloud decoding method according to an embodiment of the present application.
FIG. 2a is a diagram illustrating transmission of a set threshold according to an embodiment of the present application.
FIG. 3 is a block diagram of a point cloud encoding apparatus according to an embodiment of the present application.
FIG. 4 is a block diagram of a point cloud decoding apparatus according to an embodiment of the present application.
FIG. 4a is a block diagram of a point cloud decoding apparatus according to an embodiment of the present application.
FIG. 5 is a block diagram of a first communication node according to an embodiment of the present application.
FIG. 6 is a block diagram of a second communication node according to an embodiment of the present application.

### DETAILED DESCRIPTION

To illustrate the object, solutions and advantages of the present application clearer, embodiments of the present application are described hereinafter in detail in conjunction with the drawings. It is to be noted that if not in collision, embodiments of the present application and features therein may be combined with each other in any manner.

The steps illustrated in the flowcharts among the drawings may be performed by, for example, a computer system capable of executing a set of computer-executable instructions. Moreover, although logical sequences are illustrated in the flowcharts, the steps illustrated or described may be performed in sequences different from those described herein in some cases.

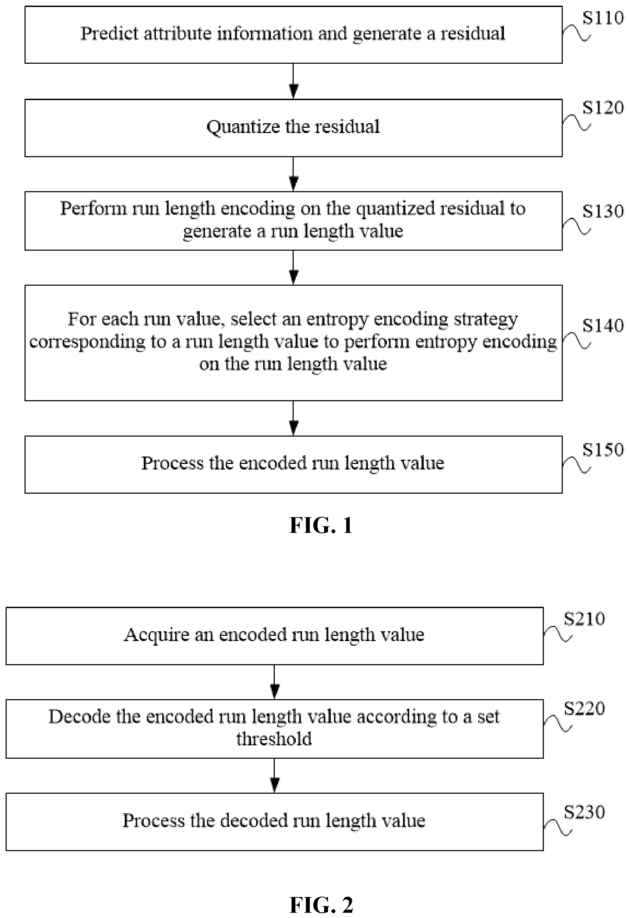

FIG. 1 is a flowchart of a point cloud encoding method according to an embodiment of the present application. In an example embodiment, the method may be applied to point cloud encoding. The method may be performed by a point cloud encoding apparatus. The apparatus may be implemented by software and/or hardware and integrated in a first communication node. The first communication node may be a node for transmitting point cloud data, such as a base station or a user terminal.

Point cloud data is classified into point cloud data acquired according to the laser measurement principle, point cloud data acquired according to the photogrammetry principle, and point cloud data acquired according to the laser measurement principle and the photogrammetry principle. Point cloud data acquired according to the laser measurement principle includes 3D coordinates (XYZ) and laser reflectance. Point cloud data acquired according to the photogrammetry principle includes 3D coordinates (XYZ) and color information (RGB). Point cloud data acquired according to the laser measurement principle and the photogrammetry principle includes 3D coordinates (XYZ), laser reflectance, and color information (RGB). Regardless of the acquisition method, the amount of point cloud data after scanned will reach several million bits or even more.. Therefore, to reduce the quantity of stored and transmitted point cloud data, encoding and compression algorithms for point cloud data are one of important technologies.

Point cloud compression algorithms have been systematically studied. Point cloud compression algorithms may be divided into video-based point cloud encoding (V-PCC) and geometry-based point cloud encoding (G-PCC). G-PCC is applied to a static point cloud (acquired from a static object by a static device) and a dynamic point cloud (acquired by a dynamic device). In a G-PCC compression method, point cloud data is converted into geometric information and attribute information that are then encoded into a code stream separately. The geometric information is position information of a point, 3D coordinate Octree or a k-dimensional (KD) tree of a point. The attribute information is a component of the color or reflectance of a point.

Attribute information encoding may be performed using three methods: transformation-based method, mapping-based method, and prediction-based method. The transformation-based method is to design attribute information transformation based on reconstructed geometric information to remove correlation between the attribute information. The mapping-based method is to perform mapping in the same manner as the mapping-based geometric encoding method and then encode a heavily colored attribute video by using a video encoding technology. The prediction-based method is to predict the current attribute information by using existing attribute information, reducing the encoding cost of the current attribute information. The prediction-based method for a point cloud may be inefficient if a prediction method similar to a prediction method in image or video encoding is used in a three-dimensional space. However, when different prediction methods are used for different point cloud data characteristics, a better balance can be achieved between encoding performance and complexity. Therefore, the prediction-based method is often used in compression of point cloud attributes. The prediction-based method is to search existing attribute information for an optimal prediction value directed at the current attribute information, subtract the current attribute value from the prediction value to generate a residual, then quantize the residual, perform run length encoding on the quantized residual, and finally entropy-encode the run length value and the corresponding residual.

When point cloud attribute encoding is performed by using the prediction-based encoding method, the run length value determines the size of an entropy-encoded code word, with a long code word and a low compression rate. To solve this problem, as shown in FIG. 1, the point cloud encoding method of the present application includes S110 to S150.

In S110, attribute information is predicted, and a residual is generated.

All values of attribute information of a point cloud are traversed. A prediction value is searched for the attribute value of each point. For each point, the attribute value is subtracted from the corresponding prediction value so that a residual is generated.

The attribute information refers to information such as the color and reflectance of the point cloud. Each type of attribute information has a value at each point in the point cloud. For example, color information may be a value (R, G, B) in the RGB color space or may be a value (Y, U, V) in the YUV color space.

The prediction value may be a value closest to the current value and contained in all of the current attribute information of the point cloud or may be a value closest to the current value and contained in part of the current attribute information, for example, attribute information that has been encoded and then decoded and reconstructed.

In S120, the residual is quantized.

A quantization parameter is selected and used in quantization of the residual. Here quantization refers to a process in which continuous values or a large quantity of possible discrete values of a signal is approximated as a limited number or fewer discrete values. The quantization parameter reflects the compression amplitude of the original signal in the quantization process.

In S130, run length encoding is performed on the quantized residual to generate a run length value.

Run length encoding (RLE), also referred to as variable-length encoding, is statistical encoding. The technical feature of RLE is that the number of times of occurrence of repeated bits or character sequences is counted, and encoding is performed using the number of times of occurrence, that is, the run length value.

The run length value may appear in pairs with a corresponding residual, or the run length value may individually constitute a data sequence.

In S140, for each run length value, an entropy encoding strategy corresponding to a run length value is selected to perform entropy encoding on the run length value.

In this embodiment, entropy encoding may be performed on the run length value and the corresponding quantized residual together or separately. When entropy encoding is performed on the run length value and the corresponding quantized residual separately, entropy encoding may be performed on the quantized residual after quantization.

In this embodiment, different run length values may use different entropy encoding strategies, or a series of run length values may use a same entropy encoding strategy.

In an embodiment, a series of run length values may be run length values generated after quantization is performed on residuals by using the same quantization parameter, and run length encoding is performed on the quantized residuals. It is feasible to determine the entropy encoding strategy for this series of run length values based on only the corresponding quantization parameters.

Entropy encoding refers to encoding that does not lose any information according to an entropy principle in an encoding process. Common entropy encoding includes Shannon encoding, Huffman encoding, and arithmetic encoding, etc.

In this embodiment, an entropy encoding strategy may be selected according to runtime and compression efficiency of entropy encoding or entropy decoding.

In an embodiment, implementation of arithmetic encoding is more difficult than that of Huffman encoding, and the runtime of arithmetic encoding is longer than that of Huffman encoding, but the compression efficiency of arithmetic encoding is higher than that of Huffman encoding; therefore, Huffman encoding with a short runtime is selected when the run length value is small, and arithmetic encoding with a large run length value is selected when the run length value is large.

When using different entropy encoding strategies for different run length values, different entropy encoding strategies can be used for different run length values according to different quantization parameters; for different run length values, based on different run length values, different entropy encoding strategies are adopted.

In this embodiment, a corresponding entropy encoding strategy can be selected for each run lenth value to perform entropy encoding. It is also possible to select a corresponding entropy encoding strategy for a series of run length values to perform entropy encoding. Each run length value is entropy encoded in turn until all run length values are encoded.

It is feasible to encode the residual corresponding to one entropy-encoded run length value after the run length value is entropy-encoded or encode all residuals after all run length values are encoded.

In S150, the encoded run length value is processed.

It is feasible to generate a file based on the encoded data and store the file or generate a code stream based on the encoded data and transmit the code stream. The encoded data is the encoded point cloud data that includes the encoded run length value and the encoded residual.

In the point cloud encoding method of this embodiment, an entropy encoding strategy corresponding to a run length value is selected, and entropy encoding is performed on the run length value according to the entropy encoding strategy corresponding to the run length value. In this manner, an entropy encoding strategy more efficient for the run length value is selected adaptively, effectively reducing the size of an encoded code word and improving the compression rate.

Based on the previous embodiment, variant embodiments of the previous embodiment are provided. It is to be noted that for briefness of description, only differences from the previous embodiment are described in the variant embodiments.

In an embodiment, selecting an entropy encoding strategy corresponding to a run length value to perform entropy encoding on the run length value includes determining the entropy encoding strategy according to a quantization parameter corresponding to the run length value and a quantization parameter threshold; and performing the entropy encoding on the run length value according to the entropy encoding strategy.

In this embodiment, different run length values use different entropy encoding strategies depending on different quantization parameters.

When the entropy encoding strategy is selected in combination with quantization parameters, the quantization parameter threshold can be combined. The quantization parameter threshold can be a threshold used to determine the selected entropy encoding strategy.

The entropy encoding strategy corresponding to the run length value is determined based on a comparison between the magnitude of the quantization parameter and the magnitude of the quantization parameter threshold. Then the run length value is entropy-encoded according to the corresponding entropy encoding strategy.

In an embodiment, determining the entropy encoding strategy according to the quantization parameter corresponding to the run length value and the quantization parameter threshold includes selecting a first entropy encoding strategy when the quantization parameter corresponding to the run length value is greater than the quantization parameter threshold; and selecting a second entropy encoding strategy when the quantization parameter corresponding to the run length value is less than or equal to the quantization parameter threshold.

The first entropy encoding strategy is different from the second entropy encoding strategy.

Whether the first entropy encoding strategy or the second entropy encoding strategy is selected is determined based on a comparison between the magnitude of the quantization parameter and the magnitude of the quantization parameter threshold. The first entropy encoding strategy may be more efficient for a large run length value. The magnitude of the large value is determined according to the actual situation.

The quantization parameter threshold Th1 may be a preset value. The value of the quantization parameter threshold may be acquired according to statistical information. For example, statistics on run length values corresponding to different quantization parameters is calculated. A large run length value occurs more frequently when the quantization parameter is greater than the threshold Th1 and occurs less frequently when the quantization parameter is not greater than the threshold Th1. Therefore, entropy encoding strategy B that is more efficient for a large run length value is used when the quantization parameter is greater than the threshold Th1, and entropy encoding strategy A that is more efficient for a small run length value is used when the quantization parameter is not greater than the threshold Th1. A more efficient entropy encoding strategy means a better entropy encoding strategy based on a balance between runtime of the entropy encoding and the compression rate.

Maybe only one quantization parameter threshold Th1 is available. For example, the quantization parameter threshold Th1 is 35. When the quantization parameter is greater than 35, the first entropy encoding strategy is selected. When the quantization parameter is not greater than 35, the second entropy encoding strategy is selected.

In an embodiment, when multiple quantization parameter thresholds exist, determining the entropy encoding strategy according to the quantization parameter and the quantization parameter threshold corresponding to the run length value includes determining a threshold range where the quantization parameter corresponding to the run length value is located according to the quantization parameter and the quantization parameter threshold corresponding to the run length value; and determining the entropy encoding strategy according to the threshold range where the quantization parameter corresponding to the run length value is located.

It is feasible to obtain the threshold range by dividing the quantization parameter threshold. It is feasible to determine the corresponding entropy encoding strategy according to the threshold range corresponding to the run length value.

Illustratively, the quantization parameter threshold Th1 may be a data set that includes multiple values, for example, thresholds 35 and 15. The quantization parameter is divided into three sets, that is, three threshold ranges. When the quantization parameter is greater than 35, entropy encoding strategy B is selected. When the quantization parameter is greater than 15 and not greater than 35, entropy encoding strategy C is selected. When the quantization parameter is not greater than 15, entropy encoding strategy A is selected.

In an embodiment, the quantization parameter threshold is a preset value; or the quantization parameter threshold is encoded in encoded data; or the quantization parameter threshold is transmitted in an out-of-band manner.

The quantization parameter threshold may be a preset value stored in the first communication node and a second communication node, or the quantization parameter threshold may be encoded in encoded data, or the quantization parameter threshold may be transmitted to the second communication node in an out-of-band manner to enable the second communication node to acquire the quantization parameter threshold to decode the run length value according to the quantization parameter threshold.

In an embodiment, the quantization parameter threshold is placed in one of a sequence header, an attribute header, an attribute slice header, or attribute information.

In an embodiment, selecting an entropy encoding strategy corresponding to a run length value to perform entropy encoding on the run length value includes determining the entropy encoding strategy corresponding to the run length value according to the run length value and a run length value threshold; and performing the entropy encoding on the run length value according to the entropy encoding strategy.

In this embodiment, different run length values use different entropy encoding strategies.

When the entropy encoding strategy is selected according to the run length value, the run length value threshold may be considered. The run length value threshold can be the threshold used to determine the threshold of the selected entropy encoding strategy.

The run length value threshold may be a threshold. This embodiment determines the entropy encoding strategy corresponding to the run length value by comparing the run length value and the run length value threshold, and then performs entropy encoding on the corresponding run length value based on the determined entropy encoding strategy. In an embodiment, determining the entropy encoding strategy corresponding to the run length value according to the run length value and the run length value threshold includes selecting a third entropy encoding strategy when the run length value is greater than the run length value threshold; and selecting a fourth entropy encoding strategy when the run length value is less than or equal to the run length value threshold.

The third entropy encoding strategy is different from the fourth entropy encoding strategy.

In this embodiment, the run length value threshold can be a threshold, whether the third entropy encoding strategy or the fourth entropy encoding strategy is selected is determined based on a comparison between the run length value and the run length value threshold. The third entropy encoding strategy may be more efficient for a large run length value. The magnitude of the large value is determined according to the actual situation.

The run length value threshold Th2 is a preset value. This value may be acquired according to statistical information. For example, for each run length value, statistics on the size of a code word for a run length value corresponding to a certain value range is calculated after entropy encoding strategy A and entropy encoding strategy B are used. If the size of a code word is smaller after entropy encoding strategy B is used when the run length value is greater than Th2, entropy encoding strategy B is selected for the current run length value. If the size of a code word is smaller after entropy encoding strategy A is used when the run length value is not greater than Th2, entropy encoding strategy A is selected for the current run length value. In this embodiment, entropy encoding strategy B may be the third entropy encoding strategy, and entropy encoding strategy A may be the fourth entropy encoding strategy.

In an embodiment, it is feasible not to use the following solution: For each run length value, statistics on the size of a code word for a run length value corresponding to a certain value range is calculated after entropy encoding strategy A and entropy encoding strategy B are used.

For the run length value threshold Th2, it is also feasible to achieve a balance between the size of an encoded code word and the calculation complexity. For example, the size of a code word is smaller after entropy encoding strategy B is used when the run length value is greater than Th2, and the calculation complexity is lower after entropy encoding strategy A is used when the run length value is not greater than Th2.

Maybe only one run length value threshold Th2 is available. For example, the run length value threshold Th2 is 100. When the run length value is greater than 100, the third entropy encoding strategy is selected. When the run length value is not greater than 100, the fourth entropy encoding strategy is selected.

In an embodiment, when multiple run length value thresholds exist, determining the entropy encoding strategy corresponding to the run length value according to the run length value and the run length value threshold includes determining a threshold range where the run length value is located according to the run length value and the run length value threshold; and determining the entropy encoding strategy corresponding to the run length value according to the threshold range where the run length value is located.

It is feasible to obtain the threshold range by dividing the run length value threshold. It is feasible to determine the corresponding entropy encoding strategy according to the threshold range corresponding to the run length value.

Illustratively, the run length value threshold Th2 may be a data set that includes multiple values, for example, thresholds 200 and 100. The run length value is divided into three sets, that is, three threshold ranges. When the run length value is greater than 200, entropy encoding strategy C is selected. When the run length value is greater than 100 and not greater than 200, entropy encoding strategy B is selected. When the quantization parameter is not greater than 100, entropy encoding strategy A is selected.

After run length values are generated, it is feasible to select one run length value from the generated run length values and compare the run length value with the run length value threshold to determine the corresponding entropy encoding strategy.

It is determined whether all of the run length values have been traversed. If not all of the run length values have been traversed, another run length value is selected.

It is feasible to encode the quantized residual corresponding to one entropy-encoded run length value after the run length value is entropy-encoded or encode all residuals after all run length values are encoded.

In an embodiment, the run length value threshold is a preset value; or the run length value threshold is encoded in encoded data; or the run length value threshold is transmitted in an out-of-band manner.

The run length value threshold may be a preset value stored in the first communication node and the second communication node, or the run length value threshold may be encoded in encoded data, or the run length value threshold may be transmitted to the second communication node in an out-of-band manner to enable the second communication node to acquire the run length value threshold to decode the run length value according to the run length value threshold.

In an embodiment, the run length value threshold is placed in one of a sequence header, an attribute header, an attribute slice header, or attribute information.

The entropy encoding strategy may be selected according to a set threshold. The set threshold may include the quantization parameter threshold and the run length value threshold. The set threshold may be one threshold according to which entropy encoding strategy A or entropy encoding strategy B may be selected.

In example one, entropy encoding strategy A is Huffman encoding, and entropy encoding strategy B is arithmetic encoding; and all run length values may use the same probability model or may use a probability model dynamically updated based on context information.

In example two, entropy encoding strategy A is to perform unary encoding on the run length value and then perform arithmetic encoding on the generated unary-encoded code word. Entropy encoding strategy B is to make the run length value divided by N to generate an integer quotient and an integer remainder. For the generated quotient, entropy encoding strategy A is used. For the remainder, entropy encoding strategy D is used. Entropy encoding strategy A may be used for the quotient and the remainder simultaneously. When entropy encoding strategy A is used for the quotient and the remainder simultaneously, different probability models are used. If N is the second power of 2, a shift operation may replace division.

If the set threshold is a threshold set that includes two thresholds, entropy encoding strategy A, entropy encoding strategy B, or entropy encoding strategy C may be selected.

In example one, entropy encoding strategy A is Huffman encoding, and entropy encoding strategy B is arithmetic encoding; and all run length values may use the same probability model or may use a probability model dynamically updated based on context situation. Entropy encoding strategy C is Exponential-Golomb encoding.

In example two, entropy encoding strategy A is to perform unary encoding on the run length value and then perform arithmetic encoding on the generated unary-encoded code word. Entropy encoding strategy B is to make the run length value divided by N to generate an integer quotient and an integer remainder. For the generated quotient, entropy encoding strategy A is used. For the remainder, entropy encoding strategy D is used. Entropy encoding strategy A may be used for the quotient and the remainder simultaneously. When entropy encoding strategy A is used for the quotient and the remainder simultaneously, different probability models are used. If N is the second power of 2, a shift operation may replace division. Entropy encoding strategy C is to make the run length value divided by M to generate an integer quotient and an integer remainder. For the generated quotient, entropy encoding strategy A is used. For the remainder, entropy encoding strategy E is used. Entropy encoding strategy A may be used for the quotient and the remainder simultaneously. When entropy encoding strategy A is used for the quotient and the remainder simultaneously, different probability models are used. The probability model may be static or dynamically updated based on context. If M is the second power of 2, a shift operation may replace division.

When arithmetic encoding is used, it is feasible to train the probability statistical model of run length encoding to obtain a probability statistical model having an optimal performance.

The set threshold may be a preset value, that is, a value defaulted by both the data sending end (first communication node) and the receiving end (second communication node) after point cloud encoding and not stored in the data obtained after point cloud encoding.

The set threshold may be encoded in encoded point cloud data. Then the sending end sends the encoded data to the receiving end. The receiving end decodes the encoded data to obtain the set threshold.

Table 1 is an example table illustrating transmission of threshold information in a sequence header according to an embodiment of the present application. Table 2 is an example table illustrating transmission of threshold information in an attribute header according to an embodiment of the present application. Table 3 is an example table illustrating transmission of threshold information in an attribute slice header according to an embodiment of the present application. Table 4 is an example table illustrating transmission of threshold information in attribute information according to an embodiment of the present application.

Threshold information (including a set threshold) may be placed in a sequence header (as described in Table 1), an attribute header (as described in Table 2), an attribute slice header (as described in Table 3), or corresponding attribute information (as described in Table 4).

**Table 1 Example table illustrating transmission of threshold information in a sequence header according to an embodiment of the present application**

| | |
|---|---|
| sequence_header( ) { | Description |
| ...... | |
| runlength_code_threshold | u(8) |
| ....... | |
| } | |

**Table 2 Example table illustrating transmission of threshold information in an attribute header according to an embodiment of the present application**

| | |
|---|---|
| attribute_header( ) { | Description |
| ...... | |
| if (withColor) { | |
| ...... | |
| runlength_code_threshold | u(8) |
| ...... | |
| } | |
| ....... | |
| } | |

**Table 3 Example table illustrating transmission of threshold information in an attribute slice header according to an embodiment of the present application**

| | |
|---|---|
| attribute_slice_header( ) { | Description |
| slice_id | |
| runlength_code_threshold | u(8) |
| } | |

**Table 4 Example table illustrating transmission of threshold information in attribute information according to an embodiment of the present application**

| | |
|---|---|
| attribute_data_color( ) { | Description |
| ...... | |
| runlength_code_threshold | u(8) |
| ....... | |
| } | |

runlength_code_threshold indicates a set threshold. Tables 1 to 4 may describe the same threshold data. u(8) indicates unsigned integer 8-bit data. runlength_code_threshold may also indicate another type of data.

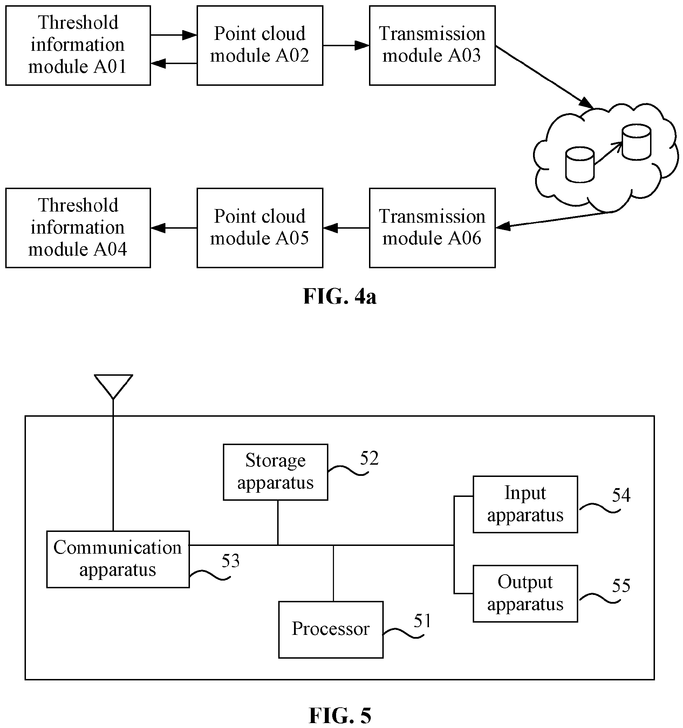

FIG. 5 is a schematic table illustrating determination of threshold information according to an embodiment of the present application. "enable" determination may be performed on runlength_code_threshold. A data expression form is as shown in Table 5, where when runlength_code_threshold_flag is equal to 1, runlength_code_threshold exists, and when runlength_code_threshold_flag is equal to 0, runlength_code_threshold does not exist. u(1) indicates unsigned integer 1-bit data. runlength_code_threshold_flag may also indicate another type of data.

runlength_code_threshold_flag may be placed in a sequence header, an attribute header, an attribute slice header (as shown in Table 5), or corresponding attribute information.

FIG. 5 Schematic table illustrating determination of threshold information according to an embodiment of the present application

| | |
|---|---|
| attribute_slice_header( ) { | Description |
| slice_id | |
| runlength_code_threshold_flag | u(1) |
| if(runlength_code_threshold_flag == 1) | |
| runlength_code_threshold | u(8) |
| } | |
| } | |

In an embodiment, the indication information of the set threshold is placed in one of a sequence header, an attribute header, an attribute slice header, or attribute information. The indication information indicates whether a set threshold exists.

The set threshold may be placed in a sequence header, an attribute header, an attribute slice header (as described in Table 5), or corresponding attribute information. When stored at a corresponding position, indication information indicating whether the set threshold is stored may be stored, and the indication information indicates whether the set threshold is stored.

The set threshold may also be transmitted in an out-of-band manner, for example, in supplemental enhancement information (SEI) of a video code stream or in a system layer.

In an embodiment, the entropy encoding strategy is a single entropy encoding method or a combination of multiple entropy encoding methods, and the entropy encoding strategy corresponding to the run length value is selected according to runtime and compression efficiency of the entropy encoding or entropy decoding.

In an embodiment, the attribute information is attribute information of one partition or all to-be-encoded attribute information, and attribute information in different partitions uses the same or different entropy encoding strategies.

The point cloud data can be partitioned first and each partition can be encoded. Any of the above methods can be used in encoding the point cloud data of each partition, which can be the same or different.

In an embodiment, all the attribute information to be encoded can be partitioned to obtain the attribute information of multiple partitions, and the encoded run length value can be determined sequentially for the attribute information of each partition. Different partitions determine encoded run length values in the same or different manner.

In an embodiment, all encoded attribute information may serve as the attribute information of S 110 when processed.

In an embodiment, processing the encoded run length value includes generating a file based on the encoded run length value and storing the file; or generating a code stream based on the encoded run length value and transmitting the code stream.

The code stream may also include the encoded residual.

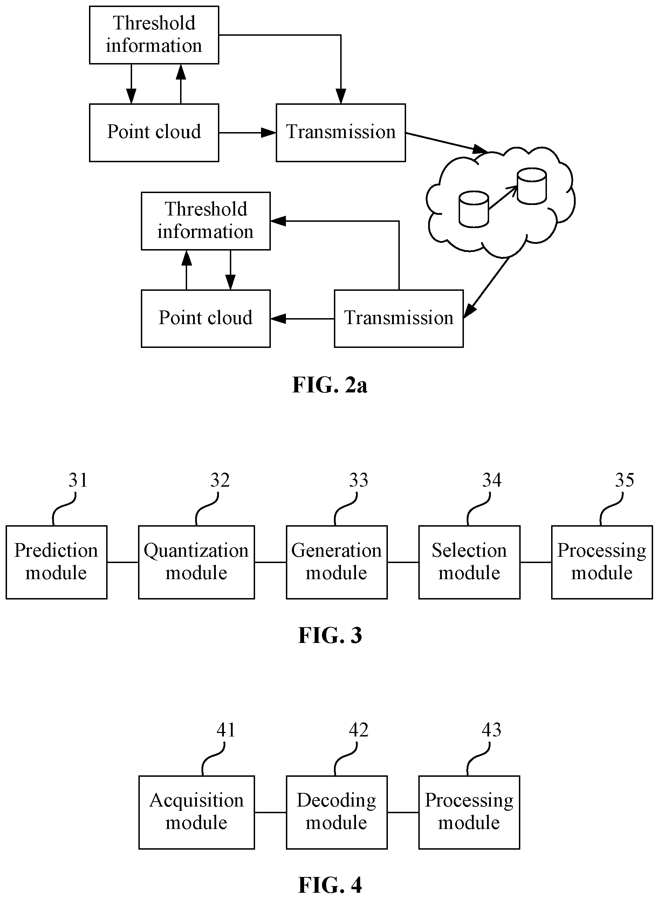

An embodiment of the present application provides a point cloud decoding method. FIG. 2 is a flowchart of a point cloud decoding method according to an embodiment of the present application. The method may be executed by a point cloud decoding apparatus, implemented by software and/or hardware, and integrated in a second communication node. The second communication node may be any node for transmitting point cloud data, such as a base station or a user terminal. For details of this embodiment, see the previous embodiment.

As shown in FIG. 2, the point cloud decoding method of this embodiment of the present application includes S210, S220, and S230.

In S210, an encoded run length value is acquired.

In this step, encoded point cloud data may be acquired from a file or a code stream, and the encoded point cloud data includes the encoded run length value.

In S220, the encoded run length value is decoded according to a set threshold.

The set threshold may be stored in the second communication node or may be parsed out from the encoded point cloud data. The run length value in attribute information is entropy-decoded according to the set threshold.

In S230, the decoded run length value is processed.

The decoded run length value may be processed in any manner according to actual requirements such as storage and application.

In the point cloud decoding method of this embodiment of the present application, the encoded run length value is decoded according to the set threshold so that a decoded run length value is obtained. This method has an improved decoding efficiency.

Based on the previous embodiment, variant embodiments of the previous embodiment are provided. It is to be noted that for briefness of description, only differences from the previous embodiment are described in the variant embodiments.

In an embodiment, the encoded run length value is acquired from a file or a code stream.

In an embodiment, the set threshold includes a quantization parameter threshold and a run length value threshold; and the set threshold is a preset threshold; or the set threshold is parsed out from encoded point cloud data that includes the encoded run length value; or the set threshold is acquired from a sequence header, an attribute header, an attribute slice header, or attribute information.

FIG. 2A is a diagram illustrating transmission of a set threshold according to an embodiment of the present application. Referring to FIG. 2A, the set threshold may be encoded in a point cloud code stream or may be individually encoded and transmitted.

An embodiment of the present application provides a point cloud encoding apparatus. The apparatus is integrated in a first communication node. FIG. 3 is a block diagram of a point cloud encoding apparatus according to an embodiment of the present application. As shown in FIG. 3, the apparatus includes a prediction module 31, a quantization module 32, a generation module 33, a selection module 34, and a processing module 35.

The prediction module 31 is configured to predict attribute information and generate a residual.

The quantization module 32 is configured to quantize the residual.

The generation module 33 is configured to perform run length encoding on the quantized residual to generate a run length value.

The selection module 34 is configured to, for each run length value, select an entropy encoding strategy corresponding to a run length value to perform entropy encoding on the run length value.

The processing module 35 is configured to process the encoded run length value.

The point cloud encoding apparatus of this embodiment is configured to implement the point cloud encoding method of FIG. 1. The implementation principles and technical effects of the point cloud encoding apparatus of this embodiment are similar to those of the point cloud encoding method of FIG. 1 and thus are not described again here.

Based on the previous embodiment, variant embodiments of the previous embodiment are provided. It is to be noted that for briefness of description, only differences from the previous embodiment are described in the variant embodiments.

In an embodiment, the selection module 34 selects an entropy encoding strategy corresponding to a run length value to perform entropy encoding on the run length value by determining the entropy encoding strategy according to a quantization parameter corresponding to the run length value and a quantization parameter threshold; and performing the entropy encoding on the run length value according to the entropy encoding strategy.

In an embodiment, the selection module 34 determines the entropy encoding strategy according to the quantization parameter corresponding to the run length value and the quantization parameter threshold by selecting a first entropy encoding strategy when the quantization parameter corresponding to the run length value is greater than the quantization parameter threshold; and selecting a second entropy encoding strategy when the quantization parameter corresponding to the run length value is less than or equal to the quantization parameter threshold.

The first entropy encoding strategy is different from the second entropy encoding strategy.

In an embodiment, when multiple quantization parameter thresholds exist, the selection module 34 determines the entropy encoding strategy according to the quantization parameter corresponding to the run length value and the quantization parameter threshold by determining a threshold range where the quantization parameter corresponding to the run length value is located according to the quantization parameter corresponding to the run length value and the quantization parameter threshold; and determining the entropy encoding strategy according to the threshold range where the quantization parameter corresponding to the run length value is located.

In an embodiment, the quantization parameter threshold is a preset value; or the quantization parameter threshold is encoded in encoded data; or the quantization parameter threshold is transmitted in an out-of-band manner.

In an embodiment, the quantization parameter threshold is placed in one of a sequence header, an attribute header, an attribute slice header, or attribute information.

In an embodiment, the selection module 34 selects an entropy encoding strategy corresponding to a run length value to perform entropy encoding on the run length value by determining the entropy encoding strategy corresponding to the run length value according to the run length value and a run length value threshold; and performing the entropy encoding on the run length value according to the entropy encoding strategy.

In an embodiment, the selection module 34 determines the entropy encoding strategy corresponding to the run length value according to the run length value and the run length value threshold by selecting a third entropy encoding strategy when the run length value is greater than the run length value threshold; and selecting a fourth entropy encoding strategy when the run length value is less than or equal to the run length value threshold.

The third entropy encoding strategy is different from the fourth entropy encoding strategy.

In an embodiment, when multiple run length value thresholds exist, the selection module 34 determines the entropy encoding strategy corresponding to the run length value according to the run length value and the run length value threshold by determining a threshold range where the run length value is located according to the run length value and the run length value threshold; and determining the entropy encoding strategy corresponding to the run length value according to the threshold range where the run length value is located.

In an embodiment, the run length value threshold is a preset value; or the run length value threshold is encoded in encoded data; or the run length value threshold is transmitted in an out-of-band manner.

In an embodiment, the run length value threshold is placed in one of a sequence header, an attribute header, an attribute slice header, or attribute information.

In an embodiment, the entropy encoding strategy is a single entropy encoding method or a combination of multiple entropy encoding methods, and the entropy encoding strategy corresponding to the run length value is selected according to runtime and compression efficiency of the entropy encoding or entropy decoding.

In an embodiment, the attribute information is attribute information of one partition or all to-be-encoded attribute information, and attribute information in different partitions uses the same or different entropy encoding strategies.

In an embodiment, the processing module 35 processes the encoded run length value by generating a file based on the encoded run length value and storing the file; or generating a code stream based on the encoded run length value and transmitting the code stream.

An embodiment of the present application provides a point cloud decoding apparatus. The apparatus is integrated in a second communication node. FIG. 4 is a block diagram of a point cloud decoding apparatus according to an embodiment of the present application. As shown in FIG. 4, the point cloud decoding apparatus includes an acquisition module 41, a decoding module 42, and a processing module 43.

The acquisition module 41 is configured to acquire an encoded run length value.

The decoding module 42 is configured to decode the encoded run length value according to a set threshold.

The processing module 43 is configured to process the decoded run length value.

The point cloud decoding apparatus of this embodiment is configured to implement the point cloud decoding method of FIG. 2. The implementation principles and technical effects of the point cloud decoding apparatus of this embodiment are similar to those of the point cloud decoding method of FIG. 2 and thus are not described again here.

Based on the previous embodiment, variant embodiments of the previous embodiment are provided. It is to be noted that for briefness of description, only differences from the previous embodiment are described in the variant embodiments.

In an embodiment, the encoded run length value is acquired from a file or a code stream.

In an embodiment, the set threshold includes at least one of a quantization parameter threshold or a run length value threshold; and the set threshold is a preset threshold; or the set threshold is parsed out from encoded point cloud data that includes the encoded run length value; or the set threshold is acquired from one of a sequence header, an attribute header, an attribute slice header, or attribute information.

FIG. 4a is a block diagram of a point cloud decoding apparatus according to an embodiment of the present application. Referring to FIG. 4a, the threshold information module A01 is configured to generate threshold information and can also be included in the point cloud encoding module A02; the point cloud encoding module A02 is configured to generate point cloud encoded data and can include the function of the threshold information module A01; the transmission module A03 is configured to transmit the point cloud encoded data and can also transmit the encoded threshold information; the threshold information module A04 is configured to generate threshold information and can also be included in the point cloud decoding module A05; the point cloud decoding module A05 is configured to decode point cloud data and can include the function of the threshold information module A04; and the transmission module A06 is configured to acquire point cloud data and can also decode the threshold information.

A module may be implemented by special-purpose hardware or by hardware capable of processing data in combination with appropriate software. Such hardware or special-purpose hardware may include application-specific integrated circuits (ASICs), various other circuits, and various processors. When implemented by a processor, the function may be provided by a single special-purpose processor, a single shared processor, or multiple independent processors (some of which may be shared). Additionally, the processor is not construed as only hardware capable of executing software. The processor may implicitly include, but is not limited to, digital signal processor (DSP) hardware, a read-only memory (ROM) for storing software, a random-access memory (RAM), or a non-volatile storage device.

The apparatus of this embodiment may be a device in a video application, for example, a mobile phone, a computer, a server, a set-top box, a portable mobile terminal, a digital video camera, or a television broadcasting system device.

It will be understood by those skilled in the art that all or part of the steps in the methods described above may be implemented by related hardware instructed by programs, and these programs may be stored in a computer-readable storage medium such as a read-only memory, a magnetic disk or an optical disk. Optionally, all or part of the steps in the embodiments described above may also be implemented by using one or more integrated circuits. Correspondingly, each module/unit in the above embodiments may be implemented by hardware or a software functional module. The present application is not limited to any specific combination of hardware and software.

The present application may have other various embodiments. Various corresponding changes and variations may be made by those skilled in the art according to the present application without departing from the spirit and essence of the present application. However, these corresponding changes and variations fall within the scope of the appended claims in the present application.

An embodiment of the present application provides a first communication node. FIG. 5 is a block diagram of a first communication node according to an embodiment of the present application. As shown in FIG. 5, the first communication node of the present application includes one or more processors 51 and a storage apparatus 52. One or more processors 51 are provided in the first communication node. In FIG. 5, one processor 51 is used as an example. The storage apparatus 52 is configured to store one or more programs. When executed by the one or more processors 51, the one or more programs cause the one or more processors 51 to perform the point cloud encoding method of embodiments of the present application.

The first communication node also includes a communication apparatus 53, an input apparatus 54, and an output apparatus 55.

The processor 51, the storage apparatus 52, the communication apparatus 53, the input apparatus 54, and the output apparatus 55 in the first communication node may be connected via a bus or in other manners. FIG. 5 uses connection via a bus as an example.

The input apparatus 54 may be configured to receive input digital or character information and generate key signal input related to user settings and function control of the first communication node. The output apparatus 65 may include a display device such as a display screen.

The communication apparatus 53 may include a receiver and a sender. The communication apparatus 53 is configured to perform information transceiving communication under the control of the processor 51. The information includes, but is not limited to, the encoded run length value.

As a computer-readable storage medium, the storage apparatus 52 may be configured to store software programs and computer-executable programs and modules such as program instructions/modules (for example, the prediction module 31, quantization module 32, generation module 33, selection module 34, and processing module 35 in the point cloud encoding apparatus) corresponding to the point cloud encoding method of embodiments of the present application. The storage apparatus 52 may include a program storage area and a data storage area. The program storage area may store an operating system and an application program required by at least one function. The data storage area may store data created depending on use of the first communication node. Additionally, the storage apparatus 52 may include a high-speed random-access memory and may also include a non-volatile memory such as at least one magnetic disk memory, a flash memory, or another non-volatile solid-state memory. In some examples, the storage apparatus 52 may also include memories remote from the processor 51. These remote memories may be connected to the first communication node via a network. Examples of the preceding network include, but are not limited to, the Internet, an intranet, a local area network, a mobile communication network, and a combination thereof.

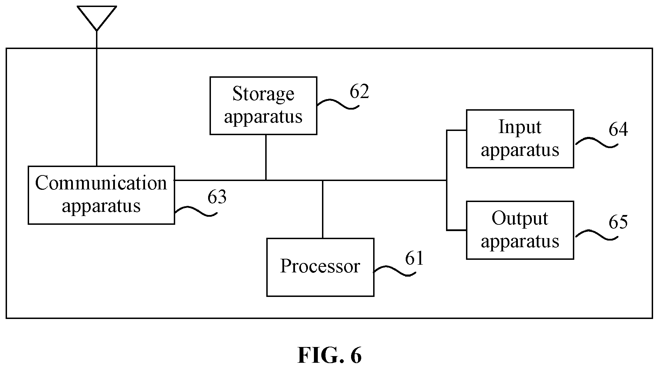

An embodiment of the present application provides a second communication node. FIG. 6 is a block diagram of a second communication node according to an embodiment of the present application. As shown in FIG. 6, the second communication node of the present application includes one or more processors 61 and a storage apparatus 62. One or more processors 61 are provided in the second communication node. In FIG. 6, one processor 61 is used as an example. The storage apparatus 62 is configured to store one or more programs. When executed by the one or more processors 61, the one or more programs cause the one or more processors 61 to perform the point cloud encoding method of embodiments of the present application.

The second communication node also includes a communication apparatus 63, an input apparatus 64, and an output apparatus 65.

The processor 61, the storage apparatus 62, the communication apparatus 63, the input apparatus 64, and the output apparatus 65 in the second communication node may be connected via a bus or in other manners. FIG. 6 uses connection via a bus as an example.

The input apparatus 64 may be configured to receive input digital or character information and generate key signal input related to user settings and function control of the second communication node. The output apparatus 65 may include a display device such as a display screen.

The communication apparatus 63 may include a receiver and a sender. The communication apparatus 63 is configured to perform information transceiving communication under the control of the processor 61. The information includes, but is not limited to, the encoded run length value.

As a computer-readable storage medium, the storage apparatus 62 may be configured to store software programs and computer-executable programs and modules such as program instructions/modules (for example, the acquisition module 41, decoding module 42, and processing module 43 in the point cloud encoding apparatus) corresponding to the point cloud encoding method of embodiments of the present application. The storage apparatus 62 may include a program storage area and a data storage area. The program storage area may store an operating system and an application program required by at least one function. The data storage area may store data created depending on use of the second communication node. Additionally, the storage apparatus 62 may include a high-speed random-access memory and may also include a non-volatile memory such as at least one magnetic disk memory, a flash memory, or another non-volatile solid-state memory. In some examples, the storage apparatus 62 may also include memories remote from the processor 61. These remote memories may be connected to the second communication node via a network. Examples of the preceding network include, but are not limited to, the Internet, an intranet, a local area network, a mobile communication network, and a combination thereof.

An embodiment of the present application provides a storage medium. The storage medium stores a computer program which, when executed by a processor, causes the processor to perform the point cloud encoding method of any embodiment of the present application.

The point cloud encoding method applied to a first communication node includes predicting attribute information and generating a residual; quantizing the residual; performing run length encoding on the quantized residual to generate a run length value; and for each run length value, selecting an entropy encoding strategy corresponding to a run length value to perform entropy encoding on the run length value; and processing the encoded run length value.

The point cloud encoding method applied to a second communication node includes acquiring an encoded run length value; decoding the encoded run length value according to a set threshold; and processing the decoded run length value.

A computer storage medium in an embodiment of the present application may adopt any combination of one or more computer-readable media. The computer-readable media may be computer-readable signal media or computer-readable storage media. For example, a computer-readable storage medium may be, but is not limited to, an electrical, magnetic, optical, electromagnetic, infrared, or semiconductor system, apparatus, or device or any combination thereof. Examples of the computer-readable storage medium (a non-exhaustive list) include an electrical connection having one or more wires, a portable computer disk, a hard disk, a random-access memory (RAM), a read-only memory (ROM), an erasable programmable read-only memory (EPROM), a flash memory, an optical fiber, a portable compact disc read-only memory (CD-ROM), an optical memory, a magnetic memory, or any suitable combination thereof. The computer-readable storage medium may be any tangible medium including or storing a program. The program may be used by or used in conjunction with an instruction execution system, apparatus, or device.

A computer-readable signal medium may include a data signal propagated in a baseband or as part of a carrier. The data signal carries computer-readable program codes. The data signal propagated in this manner may be in multiple forms, including, but not limited to, an electromagnetic signal, an optical signal, or any suitable combination thereof. The computer-readable signal medium may also be any computer-readable medium other than the computer-readable storage medium. The computer-readable medium may send, propagate, or transmit a program used by or used in conjunction with an instruction execution system, apparatus, or device.

Program codes included in the computer-readable media may be transmitted by any suitable medium including, but not limited to, a wireless medium, a wire, an optical cable, a radio frequency (RF), or any suitable combination thereof.

Computer program codes for performing the operations of the present application may be written in one or more programming languages or a combination of multiple programming languages. The programming languages include object-oriented programming languages such as Java, Smalltalk, and C++ and may also include conventional procedural programming languages such as "C" or similar programming languages. The program codes may be executed entirely on a user computer, executed partly on a user computer, executed as a stand-alone software package, executed partly on a user computer and partly on a remote computer, or executed entirely on a remote computer or a server. In the case where the remote computer is involved, the remote computer may be connected to the user computer through any type of network including a local area network (LAN) or a wide area network (WAN), or may be connected to an external computer (for example, via the Internet provided by an Internet service provider).

The preceding are example embodiments of the present application and are not intended to limit the scope of the present application.

It is to be understood by those skilled in the art that the term "user terminal" encompasses any suitable type of wireless user device, for example, a mobile phone, a portable data processing apparatus, a portable web browser, or a vehicle-mounted mobile station.

Generally speaking, embodiments of the present application may be implemented in hardware or special-purpose circuits, software, logic, or any combination thereof. For example, some aspects may be implemented in hardware while other aspects may be implemented in firmware or software executable by a controller, a microprocessor, or another computing apparatus, though the present application is not limited thereto.

The embodiments of the present application may be implemented through the execution of computer program instructions by a data processor of a mobile apparatus, for example, implemented in a processor entity, by hardware, or by a combination of software and hardware. The computer program instructions may be assembly instructions, instruction set architecture (ISA) instructions, machine instructions, machine-related instructions, microcodes, firmware instructions, status setting data, or source or object codes written in any combination of one or more programming languages.

A block diagram of any logic flow among the drawings of the present application may represent program steps, may represent interconnected logic circuits, modules, and functions, or may represent a combination of program steps and logic circuits, modules, and functions. Computer programs may be stored in a memory. The memory may be of any type suitable for a local technical environment and may be implemented using any suitable data storage technology, such as, but not limited to, a read-only memory (ROM), a random-access memory (RAM), or an optical memory device and system (for example, a digital video disc (DVD) or a compact disc (CD)). The computer-readable media may include non-transitory storage media. The data processor may be of any type suitable for the local technical environment, such as, but not limited to, a general-purpose computer, a special-purpose computer, a microprocessor, a digital signal processor (DSP), an application-specific integrated circuit (ASIC), a field-programmable gate array (FPGA), and a processor based on a multi-core processor architecture.

The detailed description of example embodiments of the present application is provided above through exemplary and non-restrictive examples. However, considering the drawings and the claims, various modifications and adjustments to the preceding embodiments are apparent to those skilled in the art and do not deviate from the scope of the present application. Accordingly, the proper scope of the present application is determined according to the claims.

## Claims

1. A point cloud encoding method, comprising:
predicting attribute information and generating a residual;
quantizing the residual;
performing run length encoding on the quantized residual to generate a run length value;
for each run length value, selecting an entropy encoding strategy corresponding to a run length value to perform entropy encoding on the run length value; and
processing the encoded run length value.

2. The method of claim 1, wherein selecting the entropy encoding strategy corresponding to the run length value to perform entropy encoding on the run length value comprises:
determining the entropy encoding strategy according to a quantization parameter corresponding to the run length value and a quantization parameter threshold; and
performing the entropy encoding on the run length value according to the entropy encoding strategy.

3. The method of claim 2, wherein determining the entropy encoding strategy according to the quantization parameter corresponding to the run length value and the quantization parameter threshold comprises:
in response to the quantization parameter corresponding to the run length value being greater than the quantization parameter threshold, selecting a first entropy encoding strategy; and
in response to the quantization parameter corresponding to the run length value being less than or equal to the quantization parameter threshold, selecting a second entropy encoding strategy,
wherein the first entropy encoding strategy is different from the second entropy encoding strategy.

4. The method of claim 2, wherein in a case where a plurality of quantization parameter thresholds exist, determining the entropy encoding strategy according to the quantization parameter corresponding to the run length value and the quantization parameter threshold comprises:
determining a threshold range where the quantization parameter corresponding to the run length value is located according to the quantization parameter corresponding to the run length value and the quantization parameter threshold; and
determining the entropy encoding strategy according to the threshold range where the quantization parameter corresponding to the run length value is located.

5. The method of any one of claims 2 to 4, wherein the quantization parameter threshold is a preset value; or the quantization parameter threshold is encoded in encoded data; or the quantization parameter threshold is transmitted in an out-of-band manner.

6. The method of claim 5, wherein the quantization parameter threshold is placed in one of a sequence header, an attribute header, an attribute slice header, or attribute information.

7. The method of claim 1, wherein selecting the entropy encoding strategy corresponding to the run length value to perform entropy encoding on the run length value comprises:
determining the entropy encoding strategy corresponding to the run length value according to the run length value and a run length value threshold; and
performing the entropy encoding on the run length value according to the entropy encoding strategy.

8. The method of claim 7, wherein determining the entropy encoding strategy corresponding to the run length value according to the run length value and the run length value threshold comprises:
in response to the run length value being greater than the run length value threshold, selecting a third entropy encoding strategy; and
in response to the run length value is less than or equal to the run length value threshold, selecting a fourth entropy encoding strategy,
wherein the third entropy encoding strategy is different from the fourth entropy encoding strategy.

9. The method of claim 7, wherein in a case where a plurality of run length value thresholds exist, determining the entropy encoding strategy corresponding to the run length value according to the run length value and the run length value threshold comprises:
determining a threshold range where the run length value is located according to the run length value and the run length value threshold; and
determining the entropy encoding strategy corresponding to the run length value according to the threshold range where the run length value is located.

10. The method of any one of claims 7 to 9, wherein the run length value threshold is a preset value; or the run length value threshold is encoded in encoded data; or the run length value threshold is transmitted in an out-of-band manner.

11. The method of claim 10, wherein the run length value threshold is placed in one of a sequence header, an attribute header, an attribute slice header, or attribute information.

12. The method of claim 1, wherein the entropy encoding strategy is a single entropy encoding method or a combination of a plurality of entropy encoding methods, and the entropy encoding strategy corresponding to the run length value is selected according to at least one of runtime or compression efficiency, wherein the runtime is at least one of runtime of the entropy encoding or runtime of entropy decoding.

13. The method of claim 1, wherein the entropy encoding strategy is a single entropy encoding method or a combination of a plurality of entropy encoding methods, and the entropy encoding strategy corresponding to the run length value is selected according to runtime of the entropy encoding or entropy decoding and compression efficiency of the entropy encoding or entropy decoding.

14. The method of claim 1, wherein the attribute information is attribute information of one partition or all to-be-encoded attribute information, and attribute information in different partitions uses a same encoding strategy or different entropy encoding strategies.

15. The method of claim 1, wherein processing the encoded run length value comprises:
generating a file based on the encoded run length value and storing the file; or
generating a code stream based on the encoded run length value and transmitting the code stream.

16. A point cloud decoding method, comprising:
acquiring an encoded run length value;
decoding the encoded run length value according to a set threshold; and
processing the decoded run length value.

17. The method of claim 16, wherein the encoded run length value is acquired from a file or a code stream.

18. The method of claim 16, wherein the set threshold comprises at least one of a quantization parameter threshold or a run length value threshold, and the set threshold is a preset threshold; or the set threshold is parsed out from encoded point cloud data that comprises the encoded run length value; or the set threshold is acquired from one of a sequence header, an attribute header, an attribute slice header, or attribute information.

19. A first communication node, comprising:
one or more processors; and
a storage apparatus configured to store one or more programs,
wherein when executed by the one or more processors, the one or more programs cause the one or more processors to perform the method of any one of claims 1 to 15.

20. A second communication node, comprising:
one or more processors; and
a storage apparatus configured to store one or more programs,
wherein when executed by the one or more processors, the one or more programs cause the one or more processors to perform the method of any one of claims 16 to 18.

21. A storage medium storing a computer program which, when executed by a processor, causes the processor to perform the method of any one of claims 1 to 18.
